# DEMANDE DE BREVET EUROPEEN

(11) **EP 0 633 114 A1**
(43) Date de publication de la demande: **11.01.1995**
(21) Numéro de dépôt: 94401577.5
(22) Date de dépôt: 08.07.1994
(51) Int. Cl.: B29C 44/00, B29C 51/02

(54) **Pièces en matière plastique cellulaire**

(30) Priorité: 08.07.1993 FR 9308390
(71) Demandeur: LE JOINT FRANCAIS, Société en Nom Collectif, F-75008 Paris (FR)
(72) Inventeur: Stassen, Pierre, F-22100 Lehon (FR)
(74) Mandataire: Ramey, Daniel

(57) **Abrégé**

Pièce en matière plastique cellulaire réalisée à partir d'une ébauche en matière plastique cellulaire par thermoformage et compression de certaines parties (10, 12, 14) de l'ébauche à des degrés différents pour former notamment des lèvres d'étanchéité (10), un palier de guidage (12) et des coussinets de lubrification (14).

## Description

L'invention concerne des pièces en matière plastique cellulaire, notamment en matière thermoplastique, réalisées en une seule pièce avec une densité de matière variable ou non uniforme.

On sait déjà réaliser des pièces en matière thermoplastique cellulaire par injection dans un moule d'une matière thermoplastique chaude comprenant un agent gonflant. La matière injectée qui est au contact des parois refroidies du moule se solidifie rapidement et forme une peau de matière compacte, tandis que la matière se trouvant à distance des parois du moule forme une âme en mousse ou à structure cellulaire sous l'action de l'agent gonflant.

Cette technique connue ne permet cependant pas de réaliser des pièces en matière cellulaire qui sont dépourvues d'une peau de matière compacte.

On connaît également, par exemple par les documents FR-A-2 673 574 et US-A-4 584 230, des procédés de thermoformage de pièces en matière cellulaire, qui permettent d'obtenir des pièces dont certaines parties ont été comprimées pour augmenter leur résistance mécanique. Les applications connues de ces procédés sont limitées, ainsi que les avantages que l'on peut tirer de ces procédés et qui ne consistent qu'en un renforcement mécanique.

L'invention a pour but d'élargir beaucoup le champ d'application de ces procédés connus de thermoformage de pièces en matière plastique cellulaire, et de multiplier les avantages qui en résultent.

Elle a pour objet des pièces en matière cellulaire réalisées sans peau superficielle compacte et ayant une densité variable ou non uniforme, permettant de conférer des fonctions et des propriétés mécaniques différentes à des parties différentes des pièces considérées.

Elle a également pour objet de telles pièces en matière cellulaire, dont on a réglé à volonté et de façon précise les densités des différentes parties selon les fonctions que ces parties doivent remplir.

L'invention propose donc une pièce en matière plastique cellulaire, réalisée par thermoformage d'une ébauche en matière cellulaire à densité sensiblement constante et comprenant des parties ayant des densités différentes, caractérisée en ce que lesdites parties de densités différentes ont des fonctions différentes déterminées par leur densité pour constituer dans ladite pièce des moyens de filtrage de fluide, des moyens d'apport de liquide, par exemple de lubrifiant, des moyens d'amortissement et d'absorption des vibrations, une garniture d'étancheité, un palier de guidage et/ou des moyens de support, de positionnement ou de fixation.

Dans un mode de réalisation de l'invention, cette pièce est réalisée en matière cellulaire à cellules ouvertes et les parties précitées ont des porosités prédéterminées.

De façon générale, l'invention trouve de très nombreuses applications et permet notamment de remplacer plusieurs pièces en matière plastique par une pièce unique dont les différentes parties ont des fonctions et des caractéristiques mécaniques différentes.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
la figure 1 représente schématiquement une pièce selon l'invention, en demi-coupe axiale et en demi-vue extérieure;
la figure 2 est une vue schématique en coupe axiale d'une autre pièce selon l'invention.

Les pièces selon l'invention sont réalisées en matière plastique cellulaire, notamment en matière thermoplastique, telle par exemple qu'un polyéther, un polyester, un polyuréthanne, ou encore en un élastomère vulcanisable tel par exemple qu'un élastomère formé sur une matrice de matière thermoplastique.

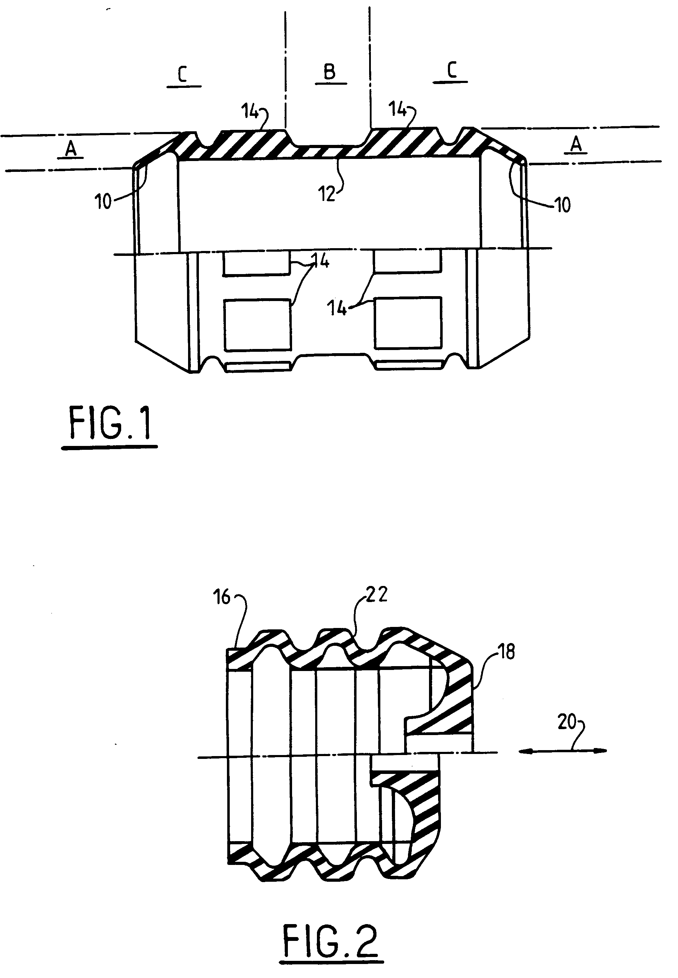

La pièce représentée en figure 1 est réalisée d'un seul tenant en une matière unique et est de forme générale cylindrique tubulaire. Elle comprend plusieurs parties ou zones ayant des densités et des fonctions différentes, à savoir des parties d'extrémités axiales 10 qui constituent des lèvres d'étanchéité venant s'appliquer sur un arbre cylindrique sur lequel la pièce est montée, une partie centrale 12 qui constitue un palier de guidage et des parties intermédiaires 14 comprises entre les lèvres d'extrémité 10 et la partie centrale 12 et qui constituent des coussinets de lubrification.

La pièce représentée en figure 1 est réalisée par exemple en polyéther et les lèvres d'extrémité 10 ont une densité de l'ordre de 0,6 à 0,8 par exemple, tandis que la partie centrale 12 formant palier de guidage a une densité de l'ordre de 0,4 et que les coussinets intermédiaires 14 ont une densité de 0,1.

La matière dont est constituée la pièce est microporeuse à cellules ouvertes et les zones 10, 12 et 14 qui ont des densités différentes ont également des porosités différentes.

Cette différence de porosité est mise à profit selon l'invention, qui prévoit que les coussinets 14 ayant la densité la plus faible peuvent constituer une réserve d'un lubrifiant dont ils sont imprégnés. Les lèvres d'étanchéité 10, qui sont voisines de ces coussinets 14, ont une dureté Shore A d'environ 80 et une densité six à huit fois supérieure à celle des coussinets 14, donc une porosité six à huit fois inférieure, de sorte qu'elles sont à peu près étanches au lubrifiant contenu dans les coussinets.

La partie 12 formant palier de guidage ayant par contre une densité intermédiaire sera plus facilement alimentée en lubrifiant que les lèvres d'étanchéité.

La pièce représentée en figure 1 est réalisée par thermoformage d'une ébauche de matière cellulaire ayant une densité sensiblement uniforme. Cette ébauche peut être de forme tubulaire cylindrique à section circulaire, ou bien elle peut éventuellement être préformée par moulage, pour avoir une forme adaptée à celle de la pièce finale à réaliser.

Cette ébauche est donc placée dans un moule de thermoformage du type en deux parties ou bien du type comprenant des tiroirs coulissants, comme c'est le cas par exemple pour la pièce représentée en figure 1.

Dans cet exemple, le moule de thermoformage va comprendre des tiroirs d'extrémité représentés schématiquement par les références A en figure 1 et qui sont mobiles axialement par rapport à la pièce pour venir former les lèvres d'étanchéité 10. Le moule comprend également un tiroir central de compression désigné par la référence B et qui est mobile perpendiculairement à l'axe de la pièce, de façon à venir comprimer la partie de l'ébauche qui formera le palier de guidage 12. Les parties C du moule, qui sont prévues entre les tiroirs A et B, peuvent être mobiles pour faciliter le démoulage de la pièce.

Les températures de thermoformages sont par exemple de l'ordre de 200°C, et les pressions de thermoformage en général sont comprises entre 0 à 100 bars environ.

Par réglage des pressions appliquées aux différentes parties de l'ébauche, on règle les densités des parties correspondantes de la pièce finale et, quand la matière est du type à cellules ouvertes, on règle également leur porosité.

Les pièces selon l'invention peuvent donc avoir des fonctions composites de support, de fixation, de guidage, d'étanchéité, d'amortissement, de filtration, etc, en fonction du type de matière cellulaire utilisée et des degrés de compression des différentes zones des ébauches, ces degrés de compression étant susceptibles de varier dans une très large mesure, par exemple de 1 à 50.

On peut éventuellement, dans le cas de pièces ayant des parties de densités très différentes, réaliser ces pièces par des moulages successifs au cours desquels on obtient progressivement les degrés voulus de compression.

La pièce représentée schématiquement en figure 2 est réalisée en une matière cellulaire à cellules ouvertes et forme un soufflet poreux, comprenant une extrémité 16 de grand diamètre par laquelle il est fixé sur un corps fixe par exemple, et une extrémité opposée 18 de diamètre plus faible, par laquelle il est fixé sur une tige déplaçable axialement en mouvement alternatif comme indiqué par la flèche double 20, de sorte que cette extrémité 18 peut occuper les deux positions représentées dans les parties haute et basse de la figure 2.

La paroi périphérique 22 du soufflet, qui relie ces deux extrémités 16 et 18, est ondulée en coupe axiale, de la façon usuelle lorsqu'on veut réaliser un soufflet.

La pièce représentée en figure 2 peut être réalisée en un caoutchouc cellulaire vulcanisable et présente l'avantage de combiner des fonctions de déformation élastique (soufflet), d'étanchéité aux poussières et aux corps solides grâce à ses extrémités 16 et 18, et de filtration en permettant un passage d'air à travers toute la surface de la pièce, ce qui peut constituer un avantage extrêmement important dans certains cas, notamment lorsqu'on devait auparavant associer de façon indémontable un élément poreux en feutre à un soufflet non poreux en caoutchouc ou en matière plastique (cas des systèmes d'assistance au freinage). La filtration de l'air par toute la surface de la pièce permet d'augmenter très largement la durée de service de la pièce, celle-ci se colmatant moins vite en raison de sa plus grande surface poreuse.

Les pièces selon l'invention, quand elles sont réalisées en matière cellulaire à cellules fermées sont également utilisables à des fins de filtrage et d'amortissement de vibrations, à des fins de protection (emballage) et pour la réalisation d'objets légers, donc flottants.

Lorsque ces pièces sont réalisées en une matière à cellules ouvertes, elles peuvent également être utilisées à des fins de dispersion ou de distribution d'un jet ou d'un écoulement de fluide.

On peut, par exemple, par mise en oeuvre de l'invention, réaliser en une seule pièce un filtre à air pour moteur à combustion interne, ce filtre à air comprenant des parties annulaires de positionnement et de montage étanche, une partie cylindrique filtrante, et des parties renforcées mécaniquement.

Les applications de l'invention sont donc extrêmement nombreuses et variées.

## Revendications

1. Pièce en matière plastique cellulaire, réalisée par thermoformage d'une ébauche en matière cellulaire à densité sensiblement constante et comprenant des parties ayant des densités différentes, caractérisée en ce que lesdites parties (10, 12, 14) de densités différentes ont des fonctions différentes déterminées par leur densité pour constituer dans ladite pièce des moyens de filtrage de fluide, des moyens d'apport de liquide, par exemple de lubrifiant, des moyens d'amortissement et d'absorption des vibrations, une garniture d'étancheité, un palier de guidage et/ou des moyens de support, de positionnement ou de fixation.

2. Pièce selon la revendication 1, caractérisée en ce qu'elle est réalisée en matière cellulaire à cellules ouvertes et en ce que les parties précitées (10, 12, 14) ont des porosités différentes prédéterminées.

3. Pièce selon la revendication 1 ou 2, caractérisée en ce qu'elle est réalisée en un matériau thermoplastique tel qu'un polyéther, un polyester ou un polyuréthanne, ou en un caoutchouc ou un élastomère vulcanisable.
